# EUROPEAN PATENT APPLICATION

(11) **EP 0 997 832 A2**
(43) Date of publication of application: **03.05.2000**
(21) Application number: 99120469.4
(22) Date of filing: 14.10.1999
(51) Int. Cl.: G06F 17/50

(54) **Simulating method of ion inplantation process in which number of particles can be reduced**

(30) Priority: 27.10.1998 JP 30565198
(71) Applicant: NEC CORPORATION, Tokyo (JP)
(72) Inventor: Sawahata, Koichi,c/o NEC Corporation, Tokyo (JP)
(74) Representative: Betten & Resch

(57) **Abstract**

In a simulating method of an ion implantation process, an attribute of a simulation particle corresponding to at least an ion is set in a model of substance. The attribute includes a position, a velocity and a movement direction, and the simulation particle being one of particles to be simulated. A scattering process of the simulation particle with an atom of the substance model is calculated based on the set attribute. When it is determined that the simulation particle is decomposed into new simulation particles through the scattering process, the new particles are held as the particles to be simulated.

## Description

### Background of the Invention

### 1. Field of the Invention

The present invention relates to a simulating method of an ion implantation process. More particularly, the present invention is directed to a simulating method of an ion implantation process, in which a simulation calculation quantity can be reduced.

### 2. Description of the Related Art

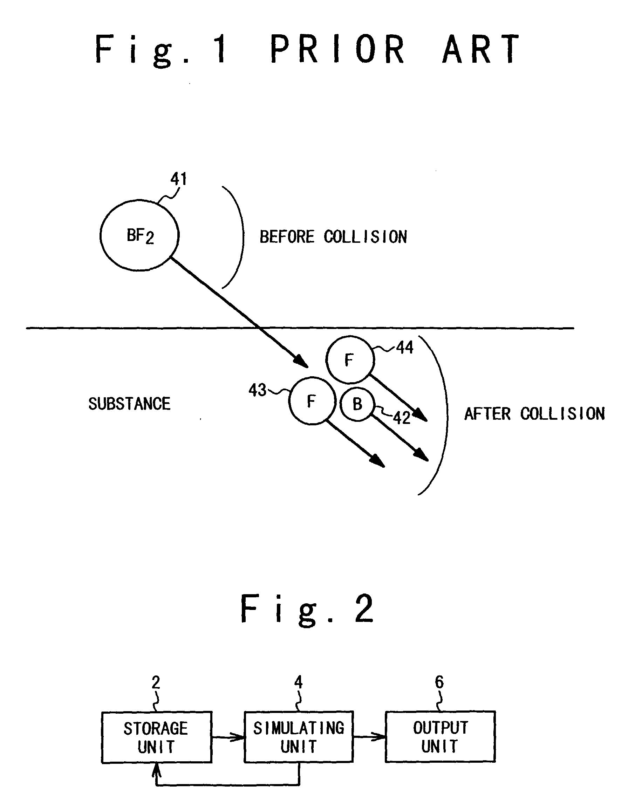

Fig. 1 is a diagram for describing a conventional simulating method of an ion implantation process when a BF₂ ion is implanted as an example. Referring to Fig. 1, conventionally, when a simulation particle 41 corresponding to the BF₂ ion is to be implanted, the simulation particle 41 corresponding to the BF₂ ion is irradiated. When the simulation particle 41 corresponding to the BF₂ ion collides with a target or substance, the above mentioned incident simulation particle 41 corresponding to the BF₂ ion is decomposed into a simulation particle 42 corresponding to a B ion and simulation particles 43 and 44 corresponding to F ions, in a case that a condition of ion decomposition is satisfied.

According to a reference "A Monte Carlo Binary Collision Model for BF₂ Implants into (100) Single-Crystal Silicon" by S. H. Yang et al (J. Electrochem. Soc. Vol.143, No11, p. 3784 (1996), it is considered as the simulation particle corresponding to the BF₂ ion is decomposed through a once scattering process.

In the above mentioned conventional simulating method, through the processes in which the simulation particle corresponding to the BF₂ ion is implanted and decomposed, one simulation particle corresponding to the BF₂ ion is decomposed into the simulation particle corresponding to the B ion and the two simulation particles corresponding to F ions. The simulation calculation is carried out to each of the simulation particle corresponding to the B ion and the simulation particles corresponding to the F ions.

In conjunction with the above description, an implantation method is described in Japanese Laid Open Patent Application (JP-A-Heisei 8-139049). In this reference, the moment of the ion implantation to the crystal is determined in a high precision taking account for the crystal structure of a substrate, when the substrate is not supposed to be amorphous.

Also, a simulation method is described in Japanese Laid Open Patent Application (JP-A-Heisei 8-330376). In this reference, when the simulation calculation is carried out under the high dose condition such that there is possibility to damage a crystal target due to an ion implantation quantity, the weight of the simulation particle used in a Monte Carlo method is changed step-by-step so that the effective concentration distribution range of the calculation result is expanded and the number of simulation particles necessary finally is reduced.

Moreover, in Japanese Laid Open Patent Application (JP-A-Heisei 9-270391) is described the technique in which for the purpose of omission of preliminary calculation and improvement of statistical precision by knowing a precision lack portion of concentration, a copy is produced on the way of the track of an ion particle, and the operation to distribute the weight in accordance with the number of copies is executed in a plurality of steps, while referring to a distribution function of flight distances in a 3-dimensional space with respect to an ion.

By the way, in the above mentioned conventional simulating method of the ion implantation process, in case that the simulation particle corresponding to the BF₂ ion is implanted, the calculation time is weighted on the calculation of a F profile which is not important compared with a B profile. The reason is in that in the conventional simulating method of the ion implantation process, the simulation calculation is carried out to the simulation particles corresponding to all the F ions which are generated in the decomposition process of the simulation particle corresponding to the BF₂ ion implanted actually.

Also, the simulating method such as the Monte Carlo method needs enormous calculating time, even if the simulating method is carried out using a computer such as a work station. Thus, the reduction of a calculation quantity is demanded in practical use.

### Summary of the Invention

Therefore, an object of the present invention is to provide a simulating method of an ion implantation process in which a calculation quantity is possible to be reduced by weighting the calculation to significant ions and by reducing the number of insignificant ions.

In order to achieve an aspect of the present invention, a simulating method of an ion implantation process, includes:
(a) setting an attribute of a simulation particle corresponding to at least an ion in a model of substance, the attribute including a position, a velocity and a movement direction, and the simulation particle being one of particles to be simulated;
(b) calculating a scattering process of the simulation particle with an atom of the substance model based on the set attribute; and
(c) when it is determined that the simulation particle is decomposed into new simulation particles through the scattering process, holding the new particles as the particles to be simulated.
   Here, the simulating method may further include:
(d) when it is determined whether the simulation particle is not decomposed through the scattering process, determining whether the simulation particle is stopped; and
(e) repeating the (b) calculating and the (c) holding until it is determined that the simulation particle is stopped. Also, the simulating method may further include:
(f) when it is determined that the simulation particle is stopped, mapping the stopped simulation particle in an ion distribution map; and
(g) determining whether or not the simulation is ended over all the particles to be simulated; and
(h) executing the (a) setting to another of the particles to be simulated, when it is determined that the simulation is not ended over all the particles to be simulated.

The (b) calculating may include:
when the simulation particle corresponds to a molecular ion, determining whether or not the simulation particle has an energy larger than a binding energy of atoms of the molecular ion; and
when it is determined that the simulation particle has the energy larger than the binding energy of the atoms of the molecular ion, determining that the simulation particle is decomposed through the scattering process.

Also, it is preferable that the number of new simulation particles is equal to the number of types of atoms, when the simulation particle is a molecular ion composed of a first type of atomic ion and a second type of atomic ions.

Also, in the simulating method, the attributes of the simulation particles corresponding to a plurality of the ions may be set in the (a) setting, and the plurality of ions may be ions to be implanted into the substance. In this case, the (b) calculating includes calculating the scattering process of each of the simulation particles with the atom of the substance model based on the set attributes. In this case, the (c) holding includes:
when it is determined that the simulation particles are decomposed through the scattering process to produce ion particles, calculating a center of gravity for every type of ion particle as a position of the new simulation particle;
calculating a summation of velocity vectors of the ion particles for every type as a movement direction of the new simulation particle;
calculating an average of kinetic energies of the ion particles for every type as a velocity of the new simulation particle; and
holding the new particles for the number of types with the attributes as the particles to be simulated.

In addition, the simulation may be executed for each of a plurality of regions, and the number of the simulation particles may be determined depending on a size of each of the plurality of regions.

In order to achieve another aspect of the present invention, a computer-readable recording medium which is recorded with a program for a simulating method of an ion implantation process, includes:
(a) setting an attribute of a simulation particle corresponding to at least an ion in a model of substance, the attribute including a position, a velocity and a movement direction, and the simulation particle being one of particles to be simulated;
(b) calculating a scattering process of the simulation particle with an atom of the substance model based on the set attribute;
(c) when it is determined that the simulation particle is decomposed into new simulation particles through the scattering process, holding the new particles as the particles to be simulated.

In this way, the computer-readable recording medium may includes the above-mentioned simulation method.

### Brief Description of the Drawings

Fig. 1 is a diagram to explain a conventional simulating method of an ion implantation process when a BF₂ ion is implanted;
Fig. 2 is a block diagram showing the simulating apparatus which executes a simulating method of an ion implantation process according to a first embodiment of the present invention;
Fig. 3 is a flow chart to explain the simulating method of the ion implantation process according to the first embodiment of the present invention using the operation of the Monte Carlo method when the BF₂ ion is implanted;
Fig. 4 is a diagram to explain the simulating method of the ion implantation process according to the first embodiment of the present invention when the BF₂ ion is implanted; and
Fig. 5 is a diagram to explain the simulating method of the ion implantation process according to a second embodiment of the present invention when the BF₂ ion is implanted.

### Description of the Preferred Embodiments

Hereinafter, the simulating method of an ion implantation process of the present invention will be described with reference to the drawing.

Fig. 2 is a diagram showing a simulating apparatus for the simulating method of the ion implantation process according to the first embodiment of the present invention. Referring to Fig. 2, the simulating apparatus is composed of a storage unit 2, a simulating unit 4 and an output unit 6. The simulating unit 4 reads a program written in a recording medium (not shown) and executes the simulating method using data stored in the storage unit 2 based on the program. The simulation result is outputted from the simulating unit 4 to the output unit 6.

Next, the simulating method according to the first embodiment of the present invention will be described below taking as an example, a case where BF₂ ions are implanted.

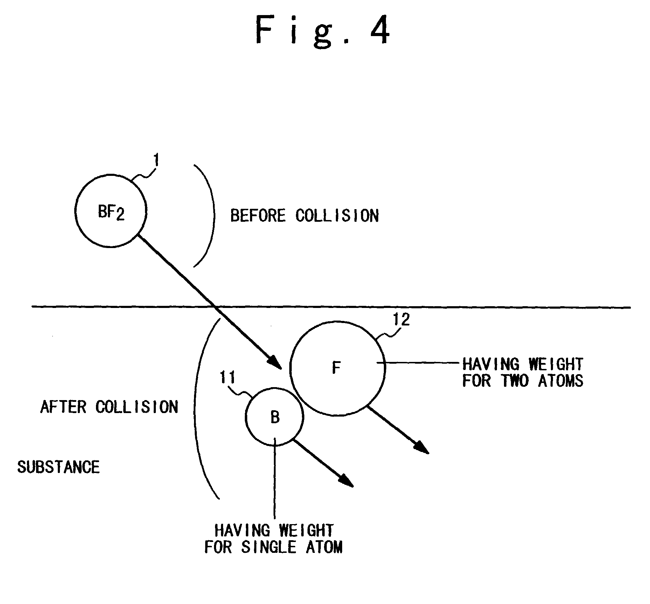

In the first embodiment, as shown in Fig. 4, a simulation particle 1 corresponding to the BF₂ ion is implanted and collides with one of atoms in substance or target so that the simulation particle 1 receive impact. In a some case, the simulation particle 1 is decomposed into a simulation particle 11 corresponding to a B ion and a simulation particle 12 corresponding to F ions.

As one method of determining whether the impact is sufficient to decompose the simulation particle 1 corresponding to the BF₂ ion, it could be considered to determine whether the energy which the simulation particle 1 corresponding to the BF₂ ion loses through the collision is larger than the binding energy of atoms F and B. In this way, the simulation particle 1 corresponding to the BF₂ ion is decomposed into the simulation particle 11 corresponding to the B ion and the simulation particle 12 corresponding to the F ions, in case of simulation calculation, as shown in Fig. 4. The simulation particle corresponding to the B ion and the simulation particle corresponding the F ions are weighted to be B:F = 1:2 on the simulation calculation. Also, it is set in such a manner that the simulation particles after the decomposition are one simulation particle corresponding to the B ion and one simulation particle corresponding to the F ions.

The weight in the simulation calculation means a quotient obtained by dividing an actual dose quantity, i.e., the number of implantation ions for every unit region by the number of simulation particles. Therefore, in the above case, when the simulation particle corresponding to the B ion represents 10 B atoms, the simulation particle corresponding to the F ions represents 20 F atoms.

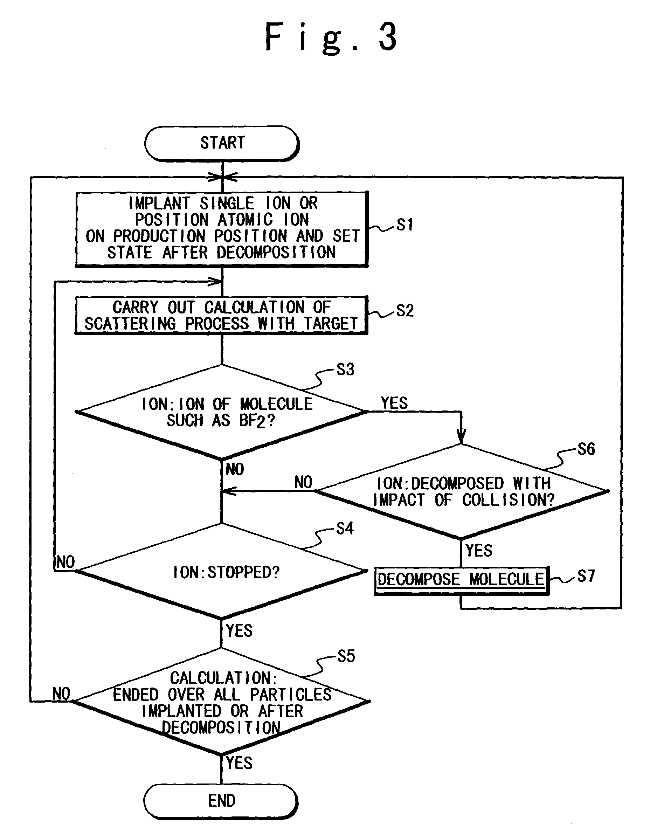

Fig. 3 is a flow chart for explaining the simulating method of the ion implantation process according to the first embodiment of the present invention will be described taking as an example, the operation of a Monte Carlo method when BF₂ ions are implanted.

Referring to Fig. 3, at a step S1, a single simulation particle corresponding to the BF₂ ion is implanted into a target substance, or the simulation particle as a decomposed atom is located on a position where the atom is obtained through the decomposition. Also, a system state is reset after the decomposition. That is, the position, velocity and movement direction of the simulation particle have been stored in the storage unit 2 as the attribute. The simulating unit 4 reads one of the attributes from the storage unit 2 and start the simulation. The simulation particle 1 first read out from the storage unit 2 corresponds to the implanted ion.

Next, at a step S1, the scattering process of the simulation particle with an atom in the above target substance is calculated. At this time, when the simulation particle is molecular, and when a decomposition condition is satisfied, the simulating unit 4 decomposes the simulation particle into new atomic simulation particles. Then, the simulation calculation is stopped.

At a step S3, the attribute of the simulation particle 1 corresponding to the above implanted ion is examined to determine whether or not the implanted ion is an ion of a molecule such as BF₂. When the above implanted ion is determined to be the BF₂ molecule through the determination, the control advances to a step S6.

At the step S6, it is determined whether or not the above simulation particle 1 has been decomposed due to the impact of the collision with the atom in the target substance. For this determination, the method of determines whether the energy which the simulation particle corresponding to the BF₂ ion loses through the collision is larger than the binding energy of atoms of F and B can be used, as mentioned above. When the above simulation particle 1 is determined to have been not decomposed in the determination, the control advances to a step S4. However, when the simulation particle 1 is determined to have been decomposed, the control advances to a step S7.

At the step S7, because the BF₂ molecular ion has been decomposed into the simulation particle 11 corresponding to the B ion and the simulation particle 12 corresponding to the F ions on the simulation calculation, the position, velocity and movement direction of each of the simulation particles 11 and 12 are stored in the storage unit 2 as the attributes. Then, the control returns to the step S1.

Thereafter, a series of the above-mentioned processes from step S1 are repeated for the next simulation particle whose attribute is read out from the storage unit 2.

In the process of the decomposition on the simulation calculation in the above step S7, the simulation particle corresponding to the B ion and the simulation particle corresponding to the F ion are produced for one simulation particle corresponding to the BF₂ ion, as mentioned above. Also, the meaning of setting a ratio of the weight of simulation particle 11 corresponding to the B ion to that of the simulation particle 12 corresponding to the F ions to be B:F = 1:2 is that the simulation particle corresponding to the F ions represents 20 atoms, when the simulation particle corresponding to the B ion represents 10 atoms.

At the step S4, it is determined whether or not the simulation particle is stopped in the target substance. If the simulation particle is determined not to be stopped, the control returns to the step S2. Then, a series of the above-mentioned processes from step S2 are repeated. If it is determined that the movement of the simulation particle is stopped, the control advances to a step S5.

At the step S5, the above stopped simulation particle is mapped into an ion distribution map. Then, it is determined whether calculation for all the simulation particles to be implanted or all the simulation particles after the decomposition is completed in the simulation calculation. If the calculation is completed, the simulating unit 4 ends the simulation calculation and outputs the ion distribution map to the output unit 6. However, if the calculation is not completed, the control goes back to the step S1 to repeat the step S1 and the subsequent steps, while selecting the next one of the simulation particles stored in the storage unit 2.

The two processes are in the above-mentioned step S1, that is, the process in which a simulation particle corresponding to an ion is implanted into the target substance, and the simulation particle corresponding to an atom ion after the decomposition is located on the position. Of the above two processes, the latter may be separated from the step S1 to be added to the step S5 or a subsequent step.

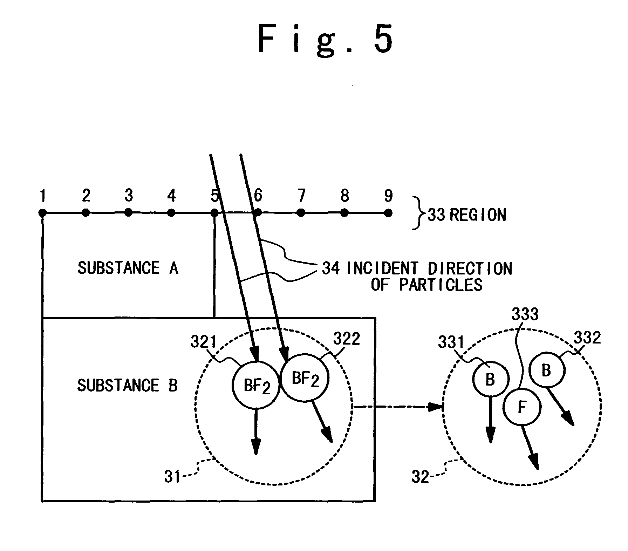

Fig. 5 is a diagram showing the simulating method of the ion implantation process according to the second embodiment of the present invention will be described taking as an example, the case when BF₂ ions are implanted. In the first embodiment, the simulation particle 12 corresponds to the F ions. However, in the second embodiment, equal to or more than two F ions are regarded as a single simulation particle. Thus, the second embodiment is different from the first embodiment in the step S2 of calculating the scattering process.

As shown in Fig. 5, a region 33 is divided into a plurality of sub-regions. All the sub-regions may be equal to each other. In this embodiment, the region 33 is divided in 8 sub-regions by 9 points from 1 to 9.

Next, one of the sub-regions is selected using a random number or a quasi random number. The sub-regions may be selected sequentially. The simulation particles corresponding to a plurality of BF₂ ions are implanted from the selected sub-region. In Fig. 5, the simulation particles 321 and 322 corresponding to the BF₂ ions are implanted in a region 31 from the incident direction 34. In case of the implantation, it is determined based on the random number or the quasi random number as previously mentioned from which of the above-mentioned sub-regions the simulation particles are implanted. However, in case that the region 33 is equally divided into the sub-regions, the number of simulation particles to be implanted from each sub-region is set to be constant over the sub-regions. When the sub-region is not one of the equally divided sub-regions, the number of simulation particles is set to be proportional to the incident area of the sub-region.

After the plurality of simulation particles are implanted from one sub-region, the calculation is carried out until each simulation particle is scattered with atoms of the target substance to be decomposed into the ions of B and F.

Next, in this embodiment, the number of simulation particles corresponding to the F ions obtained in the above scattering process are decreased. The decreasing method will be described below.

In this embodiment, two simulation particles 321 and 322 corresponding to the two BF₂ ions are decomposed to produce four simulation particles corresponding to the four F ions. Next, the center of gravity of the four simulation particles corresponding to the F ions is calculated. Thus, the center of gravity is set as the position of a new simulation particle corresponding to the F ions. Next, the movement direction of the new simulation particle corresponding to the F ion that is, the components of a velocity vector are determined based on the summation of the velocity vectors of the above four simulation particles corresponding to the F ions. The velocity of the new simulation particle corresponding to the F ions is calculated from the average of the energies of the above four simulation particles corresponding to the F ions. Thus, the new imaginary simulation particle corresponding to four F ions is produced. The new imaginary simulation particle corresponding to the F ions is manipulated as if the four simulation particles corresponding to F ions after the above decomposition and the subsequent calculation is carried out using the imaginary simulation particle in the simulation calculation shown in Fig. 3.

Fig. 5 shows the simulation particles 331 and 332 corresponding to the B ions which have been formed by the above decomposition process and the simulation particle 333 corresponding to F ions as the above-mentioned new imaginary simulation particle in the circle 32.

It should be noted that the program shown as the flow chart in Fig. 3 and executed by a processor may be stored and delivered in the recording medium such as a CD-ROM which can be read by a computer. A general purpose computer may read the above program from this recording medium and execute it.

As described above, according to the simulating method of the ion implantation process according to the present invention, although it is necessary to carry out calculation for 3 times of the number of specified simulation particles because a single simulation particle corresponding to the BF₂ ion is decomposed into one simulation particle corresponding to the B ion and two simulation particles corresponding to the F ions in the conventional method, it is sufficient to carry out the calculation for twice of the number of specified simulation particles in the present invention so that the calculating time can be reduced to about 2/3 times, compared with the conventional method.

Also, in the second embodiment, the calculation for three simulation particles is carried out for two simulation particles corresponding to the BF₂ ions. Therefore, the calculating time can be reduced to about 3/6, i.e., 1/2 times, compared with the conventional method in which the calculation for six simulation particles is carried out to one simulation particle corresponding to the BF₂ ion.

Moreover, when the calculation is carried out after simulation particles corresponding to the F ions generated from the simulation particles corresponding to the more BF2 ions is represented as a single simulation particle by the method according to the above second embodiment, the calculating time which is necessary for the simulation can be more saved.

## Claims

1. A simulating method of an ion implantation process, comprising:
(a) setting an attribute of a simulation particle corresponding to at least an ion in a model of substance, said attribute including a position, a velocity and a movement direction of said simulation particle which is one of particles to be simulated;
(b) calculating a scattering process of said simulation particle with an atom of said substance model based on said set attribute;
(c) when it is determined that said simulation particle is decomposed into new simulation particles through said scattering process, holding said new particles as said particles to be simulated.

2. A simulating method according to claim 1, further comprising:
(d) when it is determined whether said simulation particle is not decomposed through said scattering process, determining whether said simulation particle is stopped; and
(e) repeating said (b) calculating and said (c) holding until it is determined that said simulation particle is stopped.

3. A simulating method according to claim 2, further comprising:
(f) when it is determined that said simulation particle is stopped, mapping said stopped simulation particle in an ion distribution map; and
(g) determining whether or not the simulation is ended over all said particles to be simulated; and
(h) executing said (a) setting to another of said particles to be simulated, when it is determined that the simulation is not ended over all said particles to be simulated.

4. A simulating method according to any of claims 1 to 3, wherein said (b) calculating includes:
when said simulation particle corresponds to a molecular ion, determining whether or not said simulation particle has an energy larger than a binding energy of atoms of said molecular ion; and
when it is determined that said simulation particle has said energy larger than said binding energy of said atoms of said molecular ion, determining that said simulation particle is decomposed through said scattering process.

5. A simulating method according to any of claims 1 to 4, wherein the number of new simulation particles is equal to the number of types of atoms, when said simulation particle is a molecular ion composed of a first type of atomic ion and a second type of atomic ions.

6. A simulating method according to any of claims 1 to 5, wherein said attributes of said simulation particles corresponding to a plurality of said ions are set in said (a) setting, and said plurality of ions are ions to be implanted into said substance, and
said (b) calculating includes calculating said scattering process of each of said simulation particles with said atom of said substance model based on said set attributes.

7. A simulating method according to claim 6, wherein said (c) holding includes:
when it is determined that said simulation particles are decomposed through said scattering process to produce ion particles, calculating a center of gravity for every type of ion particle as a position of said new simulation particle;
calculating a summation of velocity vectors of said ion particles for every type as a movement direction of said new simulation particle;
calculating an average of kinetic energies of said ion particles for every type as a velocity of said new simulation particle; and
holding said new particles for the number of types with said attributes as said particles to be simulated.

8. A simulating method according to claim 6, wherein said simulation is executed for each of a plurality of regions, and the number of said simulation particles is determined depending on a size of each of said plurality of regions.

9. A computer-readable recording medium which is recorded with a program for a simulating method of an ion implantation process, comprising:
(a) setting an attribute of a simulation particle corresponding to at least an ion in a model of substance, said attribute including a position, a velocity and a movement direction, and said simulation particle being one of particles to be simulated;
(b) calculating a scattering process of said simulation particle with an atom of said substance model based on said set attribute;
(c) when it is determined that said simulation particle is decomposed into new simulation particles through said scattering process, holding said new particles as said particles to be simulated.

10. A computer-readable recording medium according to claim 9, further comprising:
(d) when it is determined whether said simulation particle is not decomposed through said scattering process, determining whether said simulation particle is stopped; and
(e) repeating said (b) calculating and said (c) holding until it is determined that said simulation particle is stopped.

11. A computer-readable recording medium according to claim 10, further comprising:
(f) when it is determined that said simulation particle is stopped, mapping said stopped simulation particle in an ion distribution map; and
(g) determining whether or not the simulation is ended over all said particles to be simulated; and
(h) executing said (a) setting to another of said particles to be simulated, when it is determined that the simulation is not ended over all said particles to be simulated.

12. A computer-readable recording medium according to any of claims 9 to 11, wherein said (b) calculating includes:
when said simulation particle corresponds to a molecular ion, determining whether or not said simulation particle has an energy larger than a binding energy of atoms of said molecular ion; and
when it is determined that said simulation particle has said energy larger than said binding energy of said atoms of said molecular ion, determining that said simulation particle is decomposed through said scattering process.

13. A computer-readable recording medium according to any of claims 9 to 11, wherein the number of new simulation particles is equal to the number of types of atoms, when said simulation particle is a molecular ion composed of a first type of atomic ion and a second type of atomic ions.

14. A computer-readable recording medium according to any of claims 9 to 11, wherein said attributes of said simulation particles corresponding to a plurality of said ions are set in said (a) setting, and said plurality of ions are ions to be implanted into said substance, and
said (b) calculating includes calculating said scattering process of each of said simulation particles with said atom of said substance model based on said set attributes.

15. A computer-readable recording medium according to claim 14, wherein said (c) holding includes:
when it is determined that said simulation particles are decomposed through said scattering process to produce ion particles, calculating a center of gravity for every type of ion particle as a position of said new simulation particle;
calculating a summation of velocity vectors of said ion particles for every type as a movement direction of said new simulation particle;
calculating an average of kinetic energies of said ion particles for every type as a velocity of said new simulation particle; and
holding said new particles for the number of types with said attributes as said particles to be simulated.

16. A computer-readable recording medium according to claim 14, wherein said simulation is executed for each of a plurality of regions, and the number of said simulation particles is determined depending on a size of each of said plurality of regions.

17. A computer program adapted for carrying out the steps of anyone of claims 1 to 8, when said program is run on a computer.
